# EUROPÄISCHE PATENTSCHRIFT

(11) **EP 3 561 350 B1**
(45) Veröffentlichungstag und Bekanntmachung des Hinweises auf die Patenterteilung: **13.05.2020**
(21) Anmeldenummer: 18169982.8
(22) Anmeldetag: 27.04.2018
(51) Int. Cl.: F16K 31/126, F16K 51/02

(54) **VAKUUMSICHERHEITSVENTIL**
VACUUM RELIEF VALVE
SOUPAPE DE SÉCURITÉ À VIDE

(43) Veröffentlichungstag der Anmeldung: 30.10.2019
(73) Patentinhaber: PFEIFFER VACUUM GMBH, 35614 Asslar (DE)
(72) Erfinder: Cromm, Thomas, 35457 Lollar (DE); Lange, Timo, 35415 Pohlheim (DE)
(74) Vertreter: Manitz Finsterwald Patent- und Rechtsanwaltspartnerschaft mbB

(56) Entgegenhaltungen:
- DE-A1- 3 336 128
- DE-A1- 10 357 590
- DE-A1-102008 051 453
- GB-A- 1 063 362
- JP-A- 2009 085 241
- US-A- 4 752 445
- US-A- 4 903 938

## Beschreibung

Die vorliegende Erfindung betrifft ein Vakuumsicherheitsventil für eine Vakuumpumpe, insbesondere eine Drehschiebervakuumpumpe, und ferner ein das Vakuumsicherheitsventil, eine Vakuumpumpe und eine Vakuumkammer umfassendes Vakuumsystem.

Ein Ventil gemäß dem Oberbegriff des Anspruchs 1 geht beispielweise aus der US 4 903 938 A hervor. Der Art nach im Wesentlichen vergleichbare Ventile gehen ferner aus den Druckschriften DE 103 57 590 A1, US 4 752 445 A, DE 33 36 128 A1 und JP 2009 085 241 A1 hervor.

Drehschiebervakuumpumpen beispielsweise sind ölüberlagerte Rotationsverdrängerpumpen und werden zunehmend mit einem Vakuumsicherheitsventil ausgestattet. Vakuumsicherheitsventile trennen die Pumpe vom Rezipienten, sobald es zu einem gewollten oder ungewollten Stillstand der Pumpe oder einer anderen Störung kommt. Hierdurch wird das Druckniveau im Rezipienten gehalten und insbesondere das Eindringen von Öl oder anderen Verunreinigungen in den Rezipienten verhindert.

Die bisher eingesetzten Vakuumsicherheitsventile öffnen bei Unterschreiten einer bestimmten Druckdifferenz - zwischen dem Druck im Rezipienten und dem Druck in der Pumpe - selbsttätig. Das Öffnen des Vakuumsicherheitsventils im Anschluss an ein störungsbedingtes Schließen ist damit allein von der Druckdifferenz abhängig. Es ist jedoch erstrebenswert, dass vor einem erneuten Öffnen des Vakuumsicherheitsventils ein sicherer Zustand erreicht wird, in welchem das Problem, welches zur Schließung des Vakuumsicherheitsventils führte, behoben wurde. Wird die Druckdifferenz beispielsweise vor dem Herstellen dieses sicheren Zustandes erreicht, so wird ein herkömmliches Vakuumsicherheitsventil zwangsläufig öffnen, obwohl eben dieser sichere Zustand noch nicht wieder erreicht wurde. Ein vorzeitiges Öffnen des Ventils und somit eine Wiederherstellung der strömungstechnischen Verbindung zwischen Pumpe und Rezipienten in einem nicht sicheren Zustand kann schwerwiegende Folgen haben.

Der Erfindung liegt somit die Aufgabe zugrunde, ein Vakuumsicherheitsventil bereitzustellen, welches eine erhöhte Sicherheit bietet.

Diese Aufgabe wird durch ein Vakuumsicherheitsventil mit den Merkmalen des Anspruchs 1 und ein Vakuumsystem nach Anspruch 13 gelöst.

Das erfindungsgemäße Vakuumsicherheitsventil umfasst ein Gehäuse mit einem zwischen einem Einlass und einem Auslass verlaufenden Strömungsweg für ein zu förderndes Gas, einen in dem Strömungsweg gelegenen Ventilbereich, in dem ein zwischen einer Offenstellung und einer Geschlossenstellung bewegbares Verschlusselement angeordnet ist, einen dem Ventilbereich zugeordneten Steuerraum, in dem eine eine Druckseite von einer Stellseite trennende Membran angeordnet ist, und ein zwischen der Membran und dem Verschlusselement wirksamen Stellglied, wobei das Verschlusselement mittels der druckseitig beaufschlagten Membran über das Stellglied gegen eine Rückstellkraft aus der Geschlossenstellung in die Offenstellung bewegbar und bei Wegfall der Membranbeaufschlagung aufgrund der Rückstellkraft zurück in die Geschlossenstellung bewegbar und in der Geschlossenstellung gehalten ist. Der Steuerraum ist in dem Gehäuse ausgebildet und räumlich, insbesondere fluiddicht, durch wenigstens eine Gehäusewand von dem Ventilbereich getrennt. Der stangenförmige Schaft des Stellgliedes ist zum einen durch ein scheibenförmiges Lagerelement, das auslassseitig in einer stirnseitigen Umfangsausnehmung des Gehäuses abgestützt ist und eine zentrale Durchführung für den Schaft des Stellgliedes aufweist, und zum anderen durch die Gehäusewand zentrierend gehalten und geführt.

Bei dem erfindungsgemäßen Vakuumsicherheitsventil - im Folgenden auch einfach als Ventil bezeichnet - muss zur Bewegung des Stellgliedes aus der sicheren Geschlossenstellung in die Offenstellung eine Rückstellkraft überwunden werden. Dies kann nur durch eine Druckbeaufschlagung der Membran erreicht werden. Das erfindungsgemäße Ventil öffnet daher nicht - wie herkömmliche Vakuumsicherheitsventile - zwangsläufig ab dem Unterschreiten einer bestimmten Druckdifferenz zwischen Rezipient und Pumpe. Vielmehr ermöglicht es die Erfindung beispielsweise, Bedingungen oder Zustände zu definieren, die als sicher gelten und eine manuelle oder automatische Druckbeaufschlagung der Membran erlauben oder bewirken. Insbesondere kann ein Wiederanlaufen der Pumpe als ein sicherer Zustand definiert und die Pumpe selbst für die Druckbeaufschlagung benutzt werden.

Das erfindungsgemäße Vakuumsicherheitsventil sorgt folglich für eine erhöhte Sicherheit, da ein ungewolltes Öffnen des Ventils nach einem störungsbedingten Schließen verhindert werden kann.

Unter dem Begriff "Gas" sind auch solche Medien zu verstehen, die nicht ausschließlich gasförmig sind, sondern auch Flüssigkeitsanteile wie insbesondere kleine Tröpfchen enthalten. Ein Anteile von Wasserdampf enthaltendes Medium beispielsweise ist auch ein Gas im Sinne der vorliegenden Offenbarung.

Vorteilhafte Ausführungsformen der Erfindung sind auch in den Ansprüchen, der nachfolgenden Beschreibung sowie den Figuren angegeben.

Gemäß einer Ausführungsform ist druckseitig der Druck im Steuerraum in der Offenstellung höher als in der Geschlossenstellung. Das Ventil kann folglich durch Erhöhen des Drucks geöffnet werden, Insbesondere ist es dadurch nicht erforderlich, zum Öffnen des Ventils den Steuerraum mit einem Unterdruck zu beaufschlagen.

Alternativ oder zusätzlich kann in der Geschlossenstellung die Membran weiter von dem Ventilbereich entfernt gelegen sein als in der Offenstellung.

Die Anordnung des Steuerraumes im Gehäuse ermöglicht eine platzsparende Bauweise des Ventils. Durch die räumliche Trennung des Steuerraumes von dem Ventilbereich kann eine zuverlässige Druckbeaufschlagung der Membran realisiert werden, ohne dass sich die Druckzustände des Steuerraumes und des Ventilbereichs gegenseitig beeinflussen.

Bei einer Weiterbildung weist das Stellglied eine langgestreckte Form auf und erstreckt sich geradlinig zwischen dem Steuerraum und dem Ventilbereich.

Gemäß einer weiteren Ausführungsform weist das Stellglied im Bereich eines Endes ein mit der Membran unmittelbar zusammenwirkendes Kopfteil auf und ist im Bereich eines anderen Endes mit dem Verschlusselement verbunden. Das Stellglied kann einstückig mit dem Verschlusselement ausgebildet sein. Alternativ kann ein separates Verschlusselement vorgesehen sein, das durch geeignete Mittel an dem Stellglied befestigt ist.

Gemäß einer weiteren Ausführungsform ist das Kopfteil ballig ausgeführt und die Membran umgreift das Kopfteil zumindest teilweise. Durch die ballige Ausführung kann der Membran eine relativ große Angriffsfläche geboten werden. Bei der Membran handelt es sich insbesondere um eine Rollmembran, es können jedoch auch andere Membranbauarten eingesetzt werden.

Gemäß einer Weiterbildung ist das Kopfteil hutförmig ausgeführt und ein Rückstellglied teilweise in dem Kopfteil angeordnet. Hierdurch ist eine optimale Nutzung des Platzes innerhalb des Steuerraumes möglich und gleichzeitig eine relativ große Angriffsfläche für die Membran vorhanden, die zudem durch das Kopfteil von dem Rückstellglied getrennt ist.

Gemäß einer weiteren Ausführungsform umfasst ein Rückstellglied zumindest ein Federelement, insbesondere eine Schraubendruckfeder.

Des Weiteren kann vorgesehen sein, dass ein Rückstellglied im Steuerraum zwischen einem Kopfteil des Stellgliedes und einer den Steuerraum begrenzenden Gehäusewand angeordnet ist, insbesondere einer den Steuerraum von dem Strömungsweg trennenden Gehäusewand. An der Gehäusewand kann sich das Rückstellglied folglich abstützen. Die Trennung des Steuerraums von dem Strömungsweg mittels der Gehäusewand kann hierbei gasdicht ausgeführt sein, was jedoch nicht zwingend erforderlich ist.

Bevorzugt liegt ein Kopfteil des Stellgliedes in der Offenstellung an einer den Steuerraum begrenzenden Gehäusewand an, insbesondere an einer den Steuerraum von dem Strömungsweg trennenden Gehäusewand. Hierdurch kann die Gehäusewand als Endanschlag für das Kopfteil und somit das Stellglied dienen, wodurch der maximale Stellweg für das Verschlusselement und somit die Offenstellung des Ventils genau definiert werden kann.

Gemäß einer weiteren Ausführungsform ist der Strömungsweg von einem sich zwischen dem Einlass und dem Auslass erstreckenden Strömungskanal gebildet, wobei der Einlass und der Auslass nicht auf einer durch den Strömungskanal verlaufenden Geraden liegen und/oder der Strömungsweg wenigstens zwei Kanalabschnitte mit nicht zusammenfallenden Längsachsen aufweist. Ein solcher Strömungsweg ermöglicht eine in konstruktiver Hinsicht einfache Übertragung der Membranbewegung auf das Verschlusselement mittels des Stellgliedes. Insbesondere ist es hierdurch möglich, ein vergleichsweise einfach aufgebautes, z.B. in Form einer geraden Stange vorgesehenes Stellglied zu verwenden. Bevorzugt erstreckt sich das von dem Steuerraum ausgehende Stellglied durch einen Teil des Strömungskanals hindurch, insbesondere an dem einen Kanalabschnitt vorbei zu dem in dem anderen Kanalabschnitt gelegenen Ventilbereich.

Gemäß einer weiteren Ausführungsform sind die Kanalabschnitte jeweils in Form einer im Gehäuse ausgebildeten Bohrung vorgesehen, wobei bevorzugt die Bohrungen jeweils von einer Außenseite des Gehäuses ausgehen und die eine Bohrung den Einlass und die andere Bohrung den Auslass bildet.

Des Weiteren kann vorgesehen sein, dass der Ventilbereich an einem Übergang zwischen zwei Abschnitten des Strömungsweges mit unterschiedlich großem Strömungsquerschnitt gelegen ist, wobei sich das Stellglied durch zumindest einen Teil des engeren Abschnitts hindurch zu dem Verschlusselement erstreckt und das Verschlusselement in dem weiteren Abschnitt angeordnet ist und in der Geschlossenstellung die Mündung des engeren Abschnitts in den weiteren Abschnitt verschließt.

Ein solcher Übergang zwischen Kanalabschnitten mit unterschiedlichen Querschnittsgrößen kann durch ein eine vergleichsweise einfache Form aufweisendes Verschlusselement zuverlässig abgedichtet werden, z.B. durch ein Verschlusselement in Form einer zylindrischen Scheibe.

Bei dem erfindungsgemäßen Vakuumsystem, das zumindest eine Vakuumpumpe, wenigstens eine Vakuumkammer und zumindest ein erfindungsgemäßes Vakuumsicherheitsventil umfasst, ist der Ventileinlass der Vakuumkammer und der Ventilauslass der Vakuumpumpe zugeordnet.

Gemäß einer Ausführungsform ist die Druckseite des Steuerraumes an eine Druckquelle, insbesondere an eine Hydraulikdruckquelle, der Vakuumpumpe angeschlossen, insbesondere unter Umgehung der Membran und/oder des Stellgliedes, wobei die Druckquelle derart betreibbar ist, dass bei bestimmungsgemäßem Pumpbetrieb der Vakuumpumpe die Membran beaufschlagt ist und die Offenstellung des Ventils aufrechterhalten bleibt und im Fall einer Störung des Pumpbetriebs oder nach dem Ausschalten der Vakuumpumpe die Membranbeaufschlagung wegfällt.

Hierbei kann in vorteilhafter Weise eine ohnehin vorhandene Druckquelle der Vakuumpumpe zur Druckbeaufschlagung der Membran genutzt werden. Insbesondere dann, wenn im Anschluss an eine ordnungsgemäße oder störungsbedingte Unterbrechung des Pumpbetriebs ein Wiederanlaufen der Vakuumpumpe als ein sicherer Zustand gilt, öffnet sich das Ventil automatisch, da mit dem Wiederanlaufen der Pumpe auch die Druckquelle, beispielsweise eine integrierte Hydraulikpumpe der Vakuumpumpe, wieder in Betrieb geht und so die Membran erneut beaufschlagt wird.

Gemäß einer möglichen Ausgestaltung des Systems ist eine externe Konfiguration mit außerhalb der Vakuumpumpe angeordnetem Vakuumsicherheitsventil vorgesehen.

Alternativ ist eine interne Konfiguration vorgesehen, bei der das Vakuumsicherheitsventil oder ein Gehäuse des Vakuumsicherheitsventils innerhalb eines Vakuumpumpengehäuses der Vakuumpumpe angeordnet ist oder einen Teil des Vakuumpumpengehäuses bildet oder zumindest teilweise von dem Vakuumpumpengehäuse gebildet ist.

Das Gehäuse des Vakuumsicherheitsventils kann derart ausgestaltet sein, dass das Ventil sowohl in einer externen als auch in einer internen Konfiguration verwendbar ist. Bevorzugt ist vorgesehen, dass in der externen oder internen Konfiguration zumindest eine dem Steuerraum oder dem Strömungsweg zugeordnete Gehäuseöffnung von einem in der internen bzw. externen Konfiguration entfernten, mit dem Gehäuse lösbar verbundenen Abschlusselement gebildet ist.

Durch die beiden möglichen Konfigurationen ist ein flexibler, universeller Einsatz des Vakuumsicherheitsventils in verschiedenen Vakuumsystemen möglich.

Durch das Abschlusselement kann das Gehäuse an die jeweils gewünschte Konfiguration angepasst werden. Insbesondere kann das Abschlusselement als Adapter ausgebildet sein, der es ermöglich, das Gehäuse an die jeweils vorhandene Anschlusssituation anzupassen. Beispielsweise kann in einer externen Konfiguration das Abschlusselement den Anschluss der Druckseite des Steuerraumes an einen Druckanschluss der Vakuumpumpe ermöglichen, der bei einer internen Konfiguration nicht möglich oder nicht erforderlich ist, wenn die Gehäuseöffnung des Ventils direkt an die Druckquelle der Vakuumpumpe angeschlossen werden kann. Des Weiteren kann das Abschlusselement zur Aufnahme eines insbesondere ein- und ausschraubbaren Flanschelementes dienen, über welches in der externen Konfiguration die Vakuumpumpe an eine den Auslass des Ventils bildende Gehäuseöffnung angeschlossen werden kann.

Die Erfindung wird nachfolgend lediglich beispielhaft unter Bezugnahme auf die Zeichnung erläutert.
- Fig. 1: zeigt ein erfindungsgemäßes Vakuumsystem mit einer Vakuumpumpe, einer Vakuumkammer und einem erfindungsgemäßen Vakuumsicherheitsventil in externer Konfiguration.
- Fig. 2: zeigt ein erfindungsgemäßes Vakuumsystem mit einer Vakuumpumpe, einer Vakuumkammer und einem erfindungsgemäßen Vakuumsicherheitsventil in interner Konfiguration.
- Fig. 3: zeigt ein Ausführungsbeispiel eines erfindungsgemäßen Vakuumsicherheitsventils in der Geschlossenstellung.
- Fig. 4: zeigt das Vakuumsicherheitsventil von Fig. 3 in der Offenstellung.

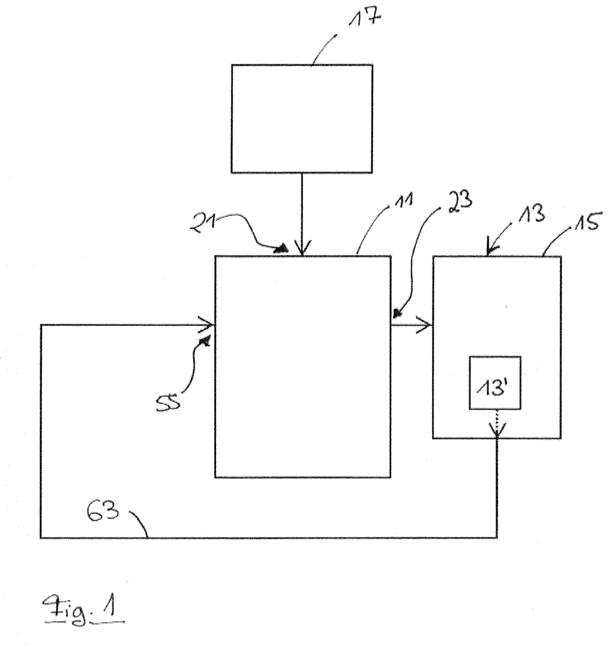

In Fig. 1 ist ein Vakuumsystem dargestellt. Dieses umfasst ein Vakuumsicherheitsventil 11, eine Vakuumpumpe 13, eine in der Vakuumpumpe 13 angeordnete Druckquelle 13' und eine auch als Rezipient bezeichnete Vakuumkammer 17, die mittels der Pumpe 13 evakuiert werden soll. Die Vakuumpumpe 13 und die Druckquelle 13' sind in einem Vakuumpumpengehäuse 15 angeordnet. Das Vakuumsicherheitsventil 11 ist in einer externen Konfiguration gezeigt, d.h. das Ventil 11 befindet sich außerhalb des Gehäuses 15 und steht über einen Einlass 21 mit der Vakuumkammer 17 und über einen Auslass 23 mit der Vakuumpumpe 13 in Verbindung. Die innerhalb der Vakuumpumpe 13 angeordnete Druckquelle 13' ist über eine externe Druckleitung 63 und ein Druckanschlusselement 55 an das Vakuumsicherheitsventil 11 angeschlossen.

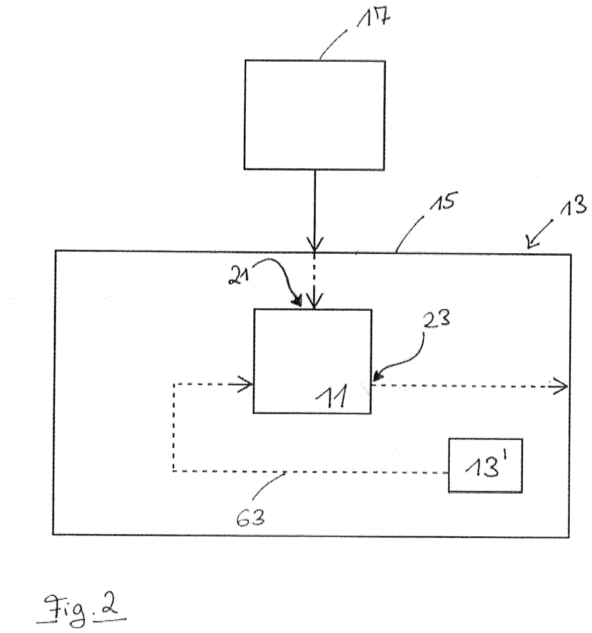

In Fig. 2 ist ein weiteres Vakuumsystem dargestellt. Dieses umfasst ebenfalls ein Vakuumsicherheitsventil 11, eine Vakuumpumpe 13, eine Druckquelle 13', ein Vakuumpumpengehäuse 15 und eine Vakuumkammer 17. Die Darstellung zeigt eine interne Konfiguration des Vakuumsicherheitsventils 11, d.h. das Ventil 11 befindet sich innerhalb des Pumpengehäuses 15 und die Vakuumkammer 17 ist über das Vakuumpumpengehäuse 15 mit dem Einlass 21 des Ventils 11 verbunden. Die Druckquelle 13' ist über eine interne Druckleitung 63 mit dem Ventil 11 verbunden. Der Auslass 23 des Ventils 11 steht mit dem Gaseinlass eines nicht gezeigten Pumpsystems der Vakuumpumpe 13 in Verbindung.

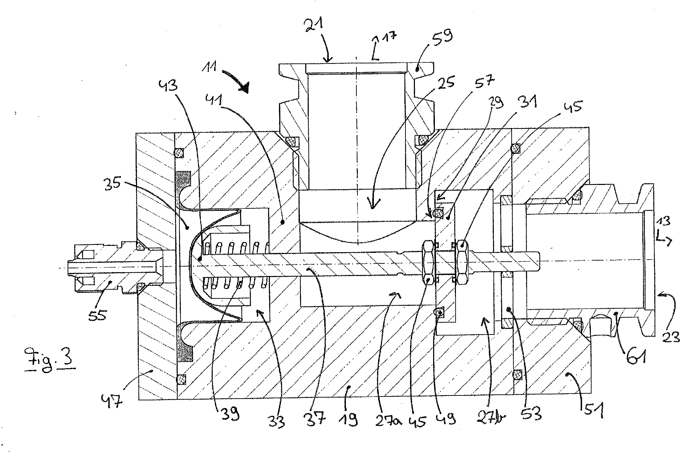

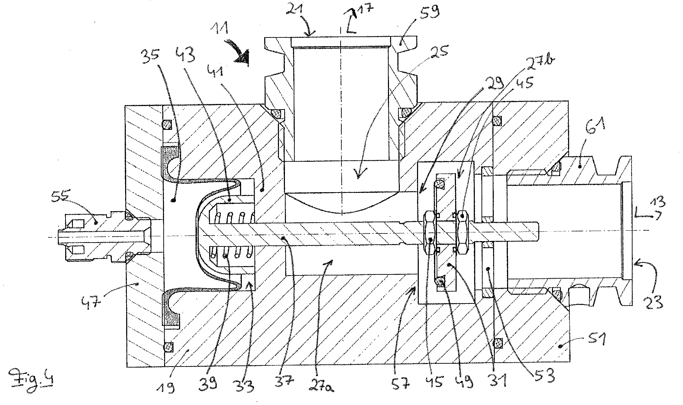

Das nachstehend anhand der Fig. 3 und 4 beschriebene Ausführungsbeispiel eines erfindungsgemäßen Vakuumsicherheitsventils 11 zeichnet sich unter anderem dadurch aus, dass es sowohl in einer externen Konfiguration gemäß Fig. 1 als auch in einer internen Konfiguration gemäß Fig. 2 verwendet werden kann.

In den Fig. 3 und 4 ist das Ventil 11 jeweils im Querschnitt dargestellt, wobei in Fig. 3 das Ventil 11 geschlossen und in Fig. 4 geöffnet ist.

Das Ventil 11 umfasst ein quaderförmiges Gehäuse 19. Die Verbindungen zur Vakuumkammer 17 und zur Vakuumpumpe 13 sind angedeutet. Einlass 21 und Auslass 23 des Ventils 11 sind jeweils durch eine Bohrung im Gehäuse 19 realisiert. In die einlassseitige Bohrung ist ein zum Anschluss an die Kammer 17 dienendes Flanschelement 59 eingeschraubt.

Der Einlass 21 mündet in einen Kanalabschnitt 25, der in einen zum Auslass 23 führenden, rechtwinklig zum Kanalabschnitt 25 verlaufenden Kanalabschnitt 27a, 27b übergeht, der einen sich an den Kanalabschnitt 25 anschließenden engeren Abschnitt 27a und einen eine Gehäuseöffnung bildenden weiteren Abschnitt 27b umfasst. Diese auslassseitige Gehäuseöffnung ist mittels eines Abschlusselements 51 verschlossen, in die ein zum Anschluss an die Pumpe 13 dienendes Flanschelement 61 eingeschraubt ist.

Der Kanalabschnitt 25 und der Kanalabschnitt 27a, 27b bilden einen Strömungsweg vom Einlass 21 zum Auslass 23. In diesem Strömungsweg befindet sich ein Ventilbereich 29 mit einem Verschlusselement 31, welches im Übergang zwischen dem engeren Abschnitt 27a und dem weiteren Abschnitt 27b positioniert und als Ventilteller ausgeführt ist. Das Verschlusselement 31 befindet sich dabei im weiteren Abschnitt 27a und liegt in der hier dargestellten Geschlossenstellung mit seiner dem Auslass 23 abgewandten Seite an einer den Übergang bildenden Schulter 57 des Gehäuses 19 unter Zwischenlage einer O-Ring-Dichtung 49 an. An Stelle der gezeigten O-Ring-Dichtung 49 können verschiedene Dichtungselemente eingesetzt werden. Das Dichtungselement kann beispielsweise auch als Flachdichtung ausgeführt sein.

Das Verschlusselement 31 ist auf einem langgestreckten Stellglied 37 befestigt und mittels zweier Sicherungsringe 45 in Längsrichtung des Stellgliedes 37 fixiert. Das Stellglied 37 erstreckt sich von einem auslassseitig im Gehäuse 19 angeordneten Lagerelement 53 durch den weiteren Abschnitt 27b, das Verschlusselement 31, den engeren Abschnitt 27a und eine Gehäusewand 41 in einen im Gehäuse 19 ausgebildeten Steuerraum 33 hinein. Die Gehäusewand 41 trennt den Steuerraum 33 von dem Ventilbereich 29.

Der stangenförmige Schaft des Stellgliedes 37 ist zum einen durch das scheibenförmige Lagerelement 53, das auslassseitig in einer stirnseitigen Umfangsausnehmung des Gehäuses 19 abgestützt ist und eine zentrale Durchführung für den Schaft des Stellgliedes 37 aufweist, und zum anderen durch die Gehäusewand 41 zentrierend gehalten und geführt.

In dem Steuerraum 33 ist eine Membran 35 angeordnet, welche eine Druckseite von einer Stellseite des Steuerraumes 33 fluiddicht trennt. Die Membran 35 ist druckseitig am Gehäuse 19 fixiert und hierzu mit einem eine Einlassöffnung der Membran 35 begrenzenden Wulstbereich in einer stirnseitig im Gehäuse 19 ausgebildeten Umfangsnut angeordnet. Ein den Wulstabschnitt radial innen begrenzender Bereich der Membran 35 ist zwischen der Gehäusestirnseite und einem Abschlusselement in Form eines Deckels 47 eingeklemmt.

An seinem im Steuerraum 33 befindlichen Ende weist das Stellglied 37 ein hutförmiges Kopfteil 43 auf. Innerhalb des Kopfteils 43 und auf dem Stellglied 37 ist eine als Rückstellglied dienende Schraubendruckfeder 39 angeordnet. Die Schraubendruckfeder 39 ist in der hier dargestellten Geschlossenstellung teilweise von dem Kopfteil 43 umgeben und erstreckt sich zwischen dem Boden des Kopfteils 43 und der Gehäusewand 41.

Die Membran 35 liegt stellseitig an der balligen Außenfläche des Kopfteils 43 an. Der druckseitige Teil des Steuerraumes 33 wird durch die Membran 35, das Gehäuse 19 und den Deckel 47 begrenzt. In eine Öffnung des Deckels 47 ist ein Druckanschlusselement 55 geschraubt, das an eine Druckleitung angeschlossen werden kann, um die Druckseite des Steuerraumes 33 z.B. mit einer Druckquelle einer Vakuumpumpe verbinden zu können (vgl. Fig. 1).

In Fig. 4 ist das Vakuumsicherheitsventil 11 in der Offenstellung gezeigt, in der die Membran 35 z.B. durch über das Druckanschlusselement 55 einströmendes Hydrauliköl eine Druckbeaufschlagung erfahren und sich verformt hat. Hierdurch wird das Stellglied 37 an seinem Kopfteil 43 beaufschlagt und in Richtung des Ventilbereiches 29 - in den Fig. 3 und 4 also nach rechts - bewegt, bis das Kopfteil 43 an der Gehäusewand 41 anliegt. Die Schraubendruckfeder 39 ist gestaucht.

Durch diese gegen die Rückstellkraft der Feder 39 erfolgende Stellbewegung hebt das im Ventilbereich 29 am Stellglied 37 angebrachte Verschlusselement 31 von seinem von der Schulter 57 des Gehäuses 19 gebildeten Ventilsitz ab. Der Strömungsweg vom Einlass 21 zum Auslass 23 ist nicht mehr durch das Verschlusselement 31 unterbrochen. Das Ventil 11 ist geöffnet.

Wie bereits erwähnt, zeigen die Fig. 3 und 4 das Ventil 11 in einer Konfiguration mit den Deckeln 47, 51 und den Flanschelementen 59, 61, die für einen externen Einsatz außerhalb der Vakuumpumpe konzipiert ist (vgl. z.B. Fig. 1). In einer internen Konfiguration sind die Deckel 47, 51 sowie die Flanschelemente 59, 61 nicht erforderlich, da das Ventil 11 in den Aufbau der Vakuumpumpe integriert werden kann. Je nach konkreter Ausgestaltung des Ventils 11 und der Vakuumpumpe können für den internen Einsatz das Gehäuse 19 und die Funktionsbauteile wie insbesondere die Membran 35, das Stellglied 37 samt Feder 39 und Ventilteller 31 mit Sicherungsringen 45 und Dichtungselement 49 sowie das Lagerelement 53 unverändert beibehalten werden oder ist ein anders aufgebautes, funktional jedoch gleichwirkendes Ventil zu verwenden. Es ist auch möglich, auf ein separates Ventilgehäuse ganz oder teilweise zu verzichten und die Funktionsteile zumindest zum Teil in das Pumpengehäuse zu integrieren.

Wie im Einleitungsteil bereits erwähnt, besteht eine besonders vorteilhafte Einsatzmöglichkeit für das erfindungsgemäße Sicherheitsventil darin, die Druckseite des Steuerraumes 33 an eine ohnehin vorhandene Druckquelle einer Vakuumpumpe anzuschließen, z.B. an eine Hydraulikpumpe einer Drehschiebervakuumpumpe. Unabhängig davon, ob eine externe (z.B. Fig. 1) oder interne (z.B. Fig. 2) Konfiguration umgesetzt wird, sorgt eine bestimmungsgemäß laufende Vakuumpumpe aufgrund der dann ebenfalls arbeitenden Hydraulikpumpe folglich selbst für einen ausreichend hohen Druck zur Beaufschlagung der Ventilmembran 35 und somit für ein Offenhalten des Ventils 11. Dieser Druck fällt ab, wenn die Vakuumpumpe gewollt oder ungewollt ausfällt, so dass in diesem unsicheren Zustand das Ventil 11 automatisch schließt. Das Ventil 11 öffnet erst dann wieder, wenn der Druck auf der Druckseite der Membran 35 ausreichende hoch ist. Dies ist gleichbedeutend mit einer arbeitenden Hydraulikpumpe und somit einer bestimmungsgemäß arbeitenden Vakuumpumpe, d.h. mit einem sicheren Zustand.

Erfindungsgemäß kann es folglich nicht zu Situationen kommen, in denen das Ventil 11 öffnet, weil eine Bedingung erfüllt ist, die nicht zwangsläufig einen sicheren Zustand bedeutet. Insbesondere ist das Verhalten des erfindungsgemäßen Ventils 11 unabhängig von der Druckdifferenz zwischen Vakuumkammer (Rezipient) und Vakuumpumpe.

Ein weiterer Vorteil des erfindungsgemäßen Ventils 11 besteht darin, dass bei gefluteter Vakuumpumpe und somit geschlossenem Ventil 11 der Ventilteller 31 nicht nur durch die Feder 39, sondern zusätzlich durch die Druckdifferenz zwischen dem mit der zumindest teilweise evakuierten Vakuumkammer in Verbindung stehenden Ventileinlass 21 und dem auf Atmosphärendruck befindlichen Ventilauslass 23 gegen seinen Ventilsitz gedrückt und so der Anpressdruck auf das Dichtungselement 49 des Ventiltellers 31 noch erhöht wird.

### Bezugszeichenliste

- 11: Vakuumsicherheitsventil
- 13: Vakuumpumpe
- 13': Druckquelle
- 15: Vakuumpumpengehäuse
- 17: Vakuumkammer
- 19: Gehäuse
- 21: Einlass
- 23: Auslass
- 25: Kanalabschnitt
- 27a: engerer Abschnitt
- 27b: weiterer Abschnitt
- 29: Ventilbereich
- 31: Verschlusselement, Ventilteller
- 33: Steuerraum
- 35: Membran
- 37: Stellglied
- 39: Rückstellglied, Federelement, Schraubendruckfeder
- 41: Gehäusewand
- 43: Kopfteil
- 45: Sicherungsring
- 47: Abschlusselement
- 49: Dichtungselement
- 51: Abschlusselement
- 53: Lagerelement
- 55: Druckanschlusselement
- 57: Schulter
- 59: Flanschelement
- 61: Flanschelement
- 63: Druckleitung

## Patentansprüche

1. Vakuumsicherheitsventil (11) für eine Vakuumpumpe (13), insbesondere eine Drehschiebervakuumpumpe, mit
einem Gehäuse (19) mit einem zwischen einem Einlass (21) und einem Auslass (23) verlaufenden Strömungsweg (25, 27a, 27b) für ein zu förderndes Gas,
einem im Strömungsweg (25, 27a, 27b) gelegenen Ventilbereich (29), in dem ein zwischen einer Geschlossenstellung und einer Offenstellung bewegbares Verschlusselement (31) angeordnet ist,
einem dem Ventilbereich (29) zugeordneten Steuerraum (33), in dem eine eine Druckseite von einer Stellseite trennende Membran (35) angeordnet ist, wobei der Steuerraum (33) in dem Gehäuse (19) ausgebildet und räumlich von dem Ventilbereich (29) durch eine Gehäusewand (41) getrennt ist, und
einem zwischen der Membran (35) und dem Verschlusselement (31) wirksamen Stellglied (37) mit einem stangenförmigen Schaft, der zum einen durch die Gehäusewand (41) zentrierend gehalten und geführt ist,
wobei das Verschlusselement (31) mittels der druckseitig beaufschlagten Membran (35) über das Stellglied (37) gegen eine Rückstellkraft aus der Geschlossenstellung in die Offenstellung bewegbar und bei Wegfall der Membranbeaufschlagung aufgrund der Rückstellkraft zurück in die Geschlossenstellung bewegbar und in der Geschlossenstellung gehalten ist;
**dadurch gekennzeichnet, dass**
der stangeförmige Schaft des Stellglieds (37) zum anderen durch ein scheibenförmiges Lagerelement (53) zentrierend gehalten und geführt ist, das auslassseitig in dem Gehäuse (19) angeordnet ist und eine zentrale Durchführung für den Schaft des Stellglieds (37) aufweist.

2. Vakuumsicherheitsventil (11) nach Anspruch 1,
wobei druckseitig der Druck im Steuerraum (33) in der Offenstellung höher ist als in der Geschlossenstellung, und/oder wobei in der Geschlossenstellung die Membran (35) weiter von dem Ventilbereich (29) entfernt gelegen ist als in der Offenstellung.

3. Vakuumsicherheitsventil (11) nach einem der vorstehenden Ansprüche,
wobei das Stellglied (37) eine langgestreckte Form aufweist und sich geradlinig zwischen dem Steuerraum (33) und dem Ventilbereich (29) erstreckt.

4. Vakuumsicherheitsventil (11) nach einem der vorstehenden Ansprüche,
wobei das Stellglied (37) im Bereich eines Endes ein mit der Membran (35) unmittelbar zusammenwirkendes Kopfteil (43) aufweist und im Bereich eines anderen Endes mit dem Verschlusselement (31) verbunden ist, wobei insbesondere das Stellglied (37) einstückig mit dem Verschlusselement (31) ausgebildet ist.

5. Vakuumsicherheitsventil (11) nach Anspruch 4,
wobei das Kopfteil (43) ballig ausgeführt ist und die Membran (35) das Kopfteil (43) zumindest teilweise umgreift.

6. Vakuumsicherheitsventil (11) nach Anspruch 4 oder 5,
wobei das Kopfteil (43) hutförmig ausgeführt ist und ein Rückstellglied (39) teilweise in dem Kopfteil (43) angeordnet ist.

7. Vakuumsicherheitsventil (11) nach einem der vorstehenden Ansprüche,
wobei ein Rückstellglied zumindest ein Federelement (39) umfasst, insbesondere eine Schraubendruckfeder.

8. Vakuumsicherheitsventil (11) nach einem der vorstehenden Ansprüche,
wobei ein Rückstellglied (39) im Steuerraum (33) zwischen einem Kopfteil (43) des Stellgliedes (37) und der den Steuerraum (33) begrenzenden Gehäusewand (41) angeordnet ist, insbesondere einer den Steuerraum (33) von dem Strömungsweg (25, 27a, 27b) trennenden Gehäusewand (41).

9. Vakuumsicherheitsventil (11) nach einem der vorstehenden Ansprüche,
wobei der Strömungsweg (25, 27a, 27b) von einem sich zwischen dem Einlass 21) und dem Auslass (23) erstreckenden Strömungskanal gebildet ist, wobei der Einlass (21) und der Auslass (23) nicht auf einer durch den Strömungskanal verlaufenden Geraden liegen und/oder wobei der Strömungskanal wenigstens zwei Kanalabschnitte (25, 27a, 27b) mit nicht zusammenfallenden Längsachsen aufweist,
wobei insbesondere sich das von dem Steuerraum (33) ausgehende Stellglied (37) durch einen Teil des Strömungskanals hindurch erstreckt, insbesondere an dem einen Kanalabschnitt (25) vorbei zu dem in dem anderen Kanalabschnitt (27a, 27b) gelegenen Ventilbereich (29).

10. Vakuumsicherheitsventil (11) nach Anspruch 9,
wobei die Kanalabschnitte (25, 27a, 27b) jeweils in Form einer im Gehäuse (19) ausgebildeten Bohrung vorgesehen sind, wobei bevorzugt die Bohrungen jeweils von einer Außenseite des Gehäuses (19) ausgehen und die eine Bohrung den Einlass (21) und die andere Bohrung den Auslass (23) bildet.

11. Vakuumsicherheitsventil (11) nach einem der vorstehenden Ansprüche,
wobei der Ventilbereich (29) an einem Übergang zwischen zwei Abschnitten (27a, 27b) des Strömungsweges mit unterschiedlich großem Strömungsquerschnitt gelegen ist, wobei sich das Stellglied (37) durch zumindest einen Teil des engeren Abschnitts (27a) hindurch zu dem Verschluss-element (31) erstreckt und das Verschlusselement (31) in dem weiteren Abschnitt (27b) angeordnet ist und in der Geschlossenstellung die Mündung des engeren Abschnitts (27a) in den weiteren Abschnitt (27b) verschließt.

12. Vakuumsystem mit einer Vakuumpumpe (13), einer Vakuumkammer (17) und einem Vakuumsicherheitsventil (11) nach einem der vorstehenden Ansprüche,
wobei der Ventileinlass (21) der Vakuumkammer (17) und der Ventilauslass (23) der Vakuumpumpe (13) zugeordnet ist.

13. Vakuumsystem nach Anspruch 12,
wobei die Druckseite des Steuerraumes (33) an eine Druckquelle (13'), insbesondere an eine Hydraulikdruckquelle, der Vakuumpumpe (13) angeschlossen ist, insbesondere unter Umgehung der Membran (35) und/oder des Stellgliedes (37), wobei die Druckquelle (13') derart betreibbar ist, dass bei bestimmungsgemäßem Pumpbetrieb der Vakuumpumpe (13) die Membran (35) beaufschlagt ist und die Offenstellung des Ventils aufrechterhalten bleibt und im Fall einer Störung des Pumpbetriebs oder nach dem Ausschalten der Vakuumpumpe (13) die Membranbeaufschlagung wegfällt.

14. Vakuumsystem nach Anspruch 12 oder 13,
wobei eine externe Konfiguration mit außerhalb der Vakuumpumpe (13) angeordnetem Vakuumsicherheitsventil (11) oder eine interne Konfiguration vorgesehen ist, bei der das Vakuumsicherheitsventil (11) oder das Gehäuse (19) des Vakuumsicherheitsventils (11) innerhalb eines Vakuumpumpengehäuses (15) der Vakuumpumpe (13) angeordnet ist oder einen Teil des Vakuumpumpengehäuses (15) bildet oder zumindest teilweise von dem Vakuumpumpengehäuse (15) gebildet ist, und/oder wobei das Gehäuse (19) des Vakuumsicherheitsventils (11) sowohl in einer externen als auch in einer internen Konfiguration verwendbar ist, wobei in der externen Konfiguration zumindest eine dem Steuerraum (33) oder dem Strömungsweg (25, 27a, 27b) zugeordnete Gehäuseöffnung von einem in der internen Konfiguration entfernten, mit dem Gehäuse (19) lösbar verbundenen Abschlusselement (47, 51) gebildet ist.

## Claims

1. A vacuum safety valve (11) for a vacuum pump (13), in particular for a rotary vane vacuum pump, comprising
a housing (19) having a flow path (25, 27a, 27b) extending between an inlet (21) and an outlet (23) for a gas to be conveyed;
a valve region (29) which is disposed in the flow path (25, 27a, 27b) and in which a closure element (31) is arranged that is movable between a closed position and an open position;
a control space (33) which is associated with the valve region (29) and in which a membrane (35) is arranged that separates a pressure side from an operating side, with the control space (33) being formed in the housing (19) and being spatially separated from the valve region (29) by a housing wall (41); and
a control element (37) which is active between the membrane (35) and the closure element (31) and which has a bar-shaped shaft that is held and guided in a centering manner, on the one hand, by the housing wall (41),
wherein the closure element (31) is movable via the control element (37) against a return force from the closed position into the open position by means of the membrane (35) acted on at the pressure side and is movable back into the closed position and is held in the closed position due to the return force when the action on the membrane (35) is removed,
**characterized in that**
the bar-shaped shaft of the control element (37) is held and guided in a centering manner, on the other hand, by a disk-shaped bearing element (53) which is arranged at the outlet side in the housing (19) and which has a central leadthrough for the shaft of the control element (37).

2. A vacuum safety valve (11) in accordance with claim 1,
wherein the pressure at the pressure side in the control space (33) is higher in the open position than in the closed position; and/or wherein the membrane (35) is disposed further remote from the valve region (29) in the closed position than in the open position.

3. A vacuum safety valve (11) in accordance with one of the preceding claims,
wherein the control element (37) has an elongated shape and extends in a straight line between the control space (33) and the valve region (29).

4. A vacuum safety valve (11) in accordance with any one of the preceding claims,
wherein the control element (37) has a head part (43) directly cooperating with the membrane (35) in the region of one end and is connected to the closure element (31) in the region of another end, with in particular the control element (37) being formed in one piece with the closure element (31).

5. A vacuum safety valve (11) in accordance with claim 4,
wherein the head part (43) is designed in ball-like form and the membrane (35) at least partly engages around the head part (43).

6. A vacuum safety valve (11) in accordance with claim 4 or with claim 5,
wherein the head part (43) is of hat shape and a return element (39) is partly arranged in the head part (43).

7. A vacuum safety valve (11) in accordance with any one of the preceding claims,
wherein a return element comprises at least one spring element (39), in particular a helical compression spring.

8. A vacuum safety valve (11) in accordance with any one of the preceding claims,
wherein a return element (39) is arranged in the control space (33) between a head part (43) of the control element (37) and the housing wall (41) bounding the control space (33), in particular a housing wall (41) separating the control space (33) from the flow path (25, 27a, 27b).

9. A vacuum safety valve (11) in accordance with any one of the preceding claims,
wherein the flow path (25, 27a, 27b) is formed by a flow passage extending between the inlet (21) and the outlet (23), with the inlet (21) and the outlet (23) not being disposed on a straight line extending through the flow passage, and/or with the flow passage having at least two passage sections (25, 27a, 27b) having non-coinciding longitudinal axes; and
wherein in particular the control element (37) starting from the control space (33) extends through a part of the flow passage, in particular past the one passage section (25) to the valve region (29) disposed in the other passage section (27a, 27b).

10. A vacuum safety valve (11) in accordance with claim 9,
wherein the passage sections (25, 27a, 27b) are each provided in the form of a bore formed in the housing (19), with preferably the bores each starting from an outer side of the housing (19) and with the one bore forming the inlet (21) and the other bore forming the outlet (23).

11. A vacuum safety valve (11) in accordance with any one of the preceding claims,
wherein the valve region (29) is disposed at a transition between two sections (27a, 27b) of the flow path having flow cross-sections of different sizes, with the control element (37) extending through at least a part of the narrower section (27a) to the closure element (31) and with the closure element (31) being arranged in the wider section (27b) and closing the opening of the narrower section (27a) into the wider section (27b) in the closed position.

12. A vacuum system comprising a vacuum pump (13); a vacuum chamber (17); and a vacuum safety valve (11) in accordance with any one of the preceding claims,
wherein the valve inlet (21) is associated with the vacuum chamber (17) and the valve outlet (23) is associated with the vacuum pump (13).

13. A vacuum system in accordance with claim 12,
wherein the pressure side of the control space (33) is connected to a pressure source (13'), in particular to a hydraulic pressure source, of the vacuum pump (13), in particular while bypassing the membrane (35) and/or the control element (37), with the pressure source (13') being operable such that the membrane (35) is acted on and the open position of the valve is maintained on a pump operation of the vacuum pump (13) in accordance with its intended purpose and the action on the membrane is removed in the event of a disruption to the pump operation or after the switching off of the vacuum pump (13).

14. A vacuum system in accordance with claim 12 or claim 13,
wherein an external configuration having a vacuum safety valve (11) arranged outside the vacuum pump (13) is provided or an internal configuration is provided in which the vacuum safety valve (11) or the housing (19) of the vacuum safety valve (11) is arranged within a vacuum pump housing (15) of the vacuum pump (13) or forms a part of the vacuum pump housing (15) or is at least partly formed by the vacuum pump housing (15); and/or
wherein the housing (19) of the vacuum safety valve (11) can be used both in an external configuration and in an internal configuration, with at least one housing opening associated with the control space (33) or with the flow path (25, 27a, 27b) being formed in the external configuration by an end element (47, 51) which in the internal configuration is remote and is releasably connected to the housing (19).

## Revendications

1. Soupape de sécurité de vide (11) pour une pompe à vide (13), en particulier une pompe à vide à palettes, comportant
un boîtier (19) ayant un trajet d'écoulement (25, 27a, 27b) pour un gaz à transporter, qui s'étend entre une entrée (21) et une sortie (23),
une zone de soupape (29) située dans le trajet d'écoulement (25, 27a, 27b), dans laquelle est disposé un élément d'obturation (31) mobile entre une position fermée et une position ouverte,
une chambre de commande (33) associée à la zone de soupape (29), dans laquelle est disposée une membrane (35) séparant un côté pression d'un côté actionnement, la chambre de commande (33) étant formée dans le boîtier (19) et étant séparée spatialement de la zone de soupape (29) par une paroi de boîtier (41), et
un actionneur (37) agissant entre la membrane (35) et l'élément d'obturation (31), ayant un arbre en forme de tige qui, d'une part, est tenu et guidé de façon centrée par la paroi de boîtier (41),
dans laquelle
l'élément d'obturation (31) peut être déplacé depuis la position fermée jusqu'à la position ouverte par l'intermédiaire de l'actionneur (37) à l'encontre d'une force de rappel au moyen de la membrane (35) sollicitée du côté pression, et, lorsque la membrane n'est plus sollicitée, ledit élément d'obturation peut être ramené à la position fermée en raison de la force de rappel et est maintenu en position fermée ;
**caractérisé en ce que**
l'arbre en forme de tige de l'actionneur (37) est, d'autre part, tenu et guidé de façon centrée par un élément de palier (53) en forme de disque qui est disposé du côté sortie dans le boîtier (19) et qui présente un passage central pour l'arbre de l'actionneur (37).

2. Soupape de sécurité de vide (11) selon la revendication 1,
dans laquelle
du côté pression, la pression dans la chambre de commande (33) est plus élevée en position ouverte qu'en position fermée, et/ou en position fermée, la membrane est plus éloignée de la zone de soupape (29) qu'en position ouverte.

3. Soupape de sécurité de vide (11) selon l'une des revendications précédentes,
dans laquelle
l'actionneur (37) présente une forme allongée et s'étend en ligne droite entre la chambre de commande (33) et la zone de soupape (29).

4. Soupape de sécurité de vide (11) selon l'une des revendications précédentes,
dans laquelle
dans la zone d'une extrémité, l'actionneur (37) comprend une partie de tête (43) qui coopère directement avec la membrane (35), et dans la zone d'une autre extrémité, il est relié à l'élément d'obturation (31), l'actionneur (37) étant en particulier formé d'une seule pièce avec l'élément d'obturation (31).

5. Soupape de sécurité de vide (11) selon la revendication 4,
dans laquelle
la partie de tête (43) est réalisée de façon bombée, et la membrane (35) entoure au moins partiellement la partie de tête (43).

6. Soupape de sécurité de vide (11) selon la revendication 4 ou 5,
dans laquelle
la partie de tête (43) est réalisée en forme de chapeau, et un organe de rappel (39) est disposé partiellement dans la partie de tête (43).

7. Soupape de sécurité de vide (11) selon l'une des revendications précédentes,
dans laquelle
un organe de rappel comprend au moins un élément ressort (39), en particulier un ressort de compression hélicoïdal.

8. Soupape de sécurité de vide (11) selon l'une des revendications précédentes,
dans laquelle
un organe de rappel (39) est disposé dans la chambre de commande (33) entre une partie de tête (43) de l'actionneur (37) et la paroi de boîtier (41) délimitant la chambre de commande (33), en particulier une paroi de boîtier (41) qui sépare la chambre de commande (33) du trajet d'écoulement (25, 27a, 27b).

9. Soupape de sécurité de vide (11) selon l'une des revendications précédentes,
dans laquelle
le trajet d'écoulement (25, 27a, 27b) est formé par un canal d'écoulement qui s'étend entre l'entrée (21) et la sortie (23), l'entrée (21) et la sortie (23) n'étant pas situées sur une droite passant par le canal d'écoulement, et/ou le canal d'écoulement comprend au moins deux tronçons de canal (25, 27a, 27b) ayant des axes longitudinaux qui ne coïncident pas, et
en particulier, l'actionneur (37) partant de la chambre de commande (33) s'étend à travers une partie du canal d'écoulement, en particulier en passant devant un tronçon de canal (25) jusqu'à la zone de soupape (29) située dans l'autre tronçon de canal (27a, 27b).

10. Soupape de sécurité de vide (11) selon la revendication 8,
dans laquelle
les tronçons de canal (25, 27a, 27b) sont prévus chacun sous la forme d'un perçage ménagé dans le boîtier (19), les perçages partant de préférence chacun d'un côté extérieur du boîtier (19), et
un perçage constitue l'entrée (21) et l'autre perçage constitue la sortie (23).

11. Soupape de sécurité de vide (11) selon l'une des revendications précédentes,
dans laquelle
la zone de soupape (29) est située au niveau d'une transition entre deux tronçons (27a, 27b) du trajet d'écoulement avec des sections transversales de différentes tailles, l'actionneur (37) s'étendant à travers une partie au moins du tronçon plus étroit (27a) jusqu'à l'élément d'obturation (31), et l'élément d'obturation (31) étant disposé dans le tronçon plus large (27b) et obturant, en position fermée, l'embouchure du tronçon plus étroit (27a) vers le tronçon plus large (27b).

12. Système de vide comportant une pompe à vide (13), une chambre à vide (17) et une soupape de sécurité de vide (11) selon l'une des revendications précédentes,
dans lequel
l'entrée de soupape (21) est associée à la chambre à vide (17), et la sortie de soupape (23) est associée à la pompe à vide (13).

13. Système de vide selon la revendication 12,
dans lequel
le côté pression de la chambre de commande (33) est raccordé à une source de pression (13'), en particulier à une source de pression hydraulique, de la pompe à vide (13), en particulier en contournant la membrane (35) et/ou l'actionneur (37), la source de pression (13') pouvant fonctionner de telle sorte que lors d'un fonctionnement adéquat de la pompe à vide (13), la membrane (35) est sollicitée, et la position ouverte de la soupape est maintenue, et en cas de perturbation du fonctionnement de la pompe ou après l'arrêt de la pompe à vide (13), la sollicitation de la membrane est supprimée.

14. Système de vide selon la revendication 12 ou 13,
dans lequel
il est prévu une configuration externe ayant une soupape de sécurité de vide (11) disposée à l'extérieur de la pompe à vide (13), ou une configuration interne dans laquelle la soupape de sécurité de vide (11) ou le boîtier (19) de la soupape de sécurité de vide (11) est disposé(e) à l'intérieur d'un boîtier (15) de la pompe à vide (13) ou constitue une partie du boîtier (15) de la pompe à vide ou est formé(e) au moins partiellement par le boîtier (15) de la pompe à vide, et/ou
le boîtier (19) de la soupape de sécurité de vide (11) est utilisable aussi bien dans une configuration externe que dans une configuration interne, et
dans la configuration externe, au moins une ouverture de boîtier associée à la chambre de commande (33) ou au trajet d'écoulement (25, 27a, 27b) est constituée par un élément de terminaison (47, 51) qui est relié de façon détachable au boîtier (19) et qui, dans la configuration interne, est enlevé.
